(19) Europäisches Patentamt
European Patent Office
Office européen des brevets

(11) **EP 3 090 348 B1**

(12) **EUROPEAN PATENT SPECIFICATION**

(45) Date of publication and mention
of the grant of the patent:
**21.03.2018 Bulletin 2018/12**

(51) Int Cl.:
*G06F 13/10* *(2006.01)*        *G06F 13/42* *(2006.01)*

(21) Application number: **14830677.2**

(22) Date of filing: **16.12.2014**

(86) International application number:
**PCT/IB2014/066965**

(87) International publication number:
**WO 2015/101869 (09.07.2015 Gazette 2015/27)**

(54) **METHOD FOR EXCHANGING CONTROLS THROUGH A USB DISC AND RELATIVE DEVICES WHICH ALLOW THE IMPLEMENTATION THEREOF**

VERFAHREN ZUM AUSTAUSCH VON STEUERUNGEN EINER USB-PLATTE UND ZUGEHÖRIGE VORRICHTUNGEN ZUR IMPLEMENTIERUNG DAVON

PROCÉDÉ D'ÉCHANGE DE COMMANDE VIA UN DISQUE USB, ET DISPOSITIFS CORRESPONDANTS POUR L'IMPLÉMENTATION DU PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.12.2013 IT RM20130728**

(43) Date of publication of application:
**09.11.2016 Bulletin 2016/45**

(73) Proprietor: **HERMES-COMM S.R.L.S.**
**20121 Milano (MI) (IT)**

(72) Inventors:
• **FORLANI, Paolo**
  **20135 Milano (MI) (IT)**
• **CARBONERA, Antonio**
  **20135 Milano (MI) (IT)**
• **GARAVAGLIA, Roberto**
  **20135 Milano (MI) (IT)**

(74) Representative: **Fiammenghi, Eva et al**
**Fiammenghi - Fiammenghi**
**Via delle Quattro Fontane, 31**
**00184 Roma (IT)**

(56) References cited:
**US-A1- 2004 193 785      US-B1- 6 307 955**
**US-B2- 8 370 835**

## Description

### Field of the invention

The present invention generally refers to the use of the digitised signature for the instantaneous identification of a person as regards the commercial bank transactions, more in particular it regards the method of interaction between the hardware peripheral designated for the detection of the client's signature and the computer, when the inter-work between the latter occurs from a remote station, on a local network or intranet or even through the Internet.

### State of the art

In the field of information technology, there are peripheral devices for computers which utilise an interface of the HID (Human Interface Device) type. Mouses are an example of these devices: they are used for transmitting the position of the mouse to computer with high periodicity, with the aim of allowing the user to quickly move the pointer on the screen for quick interaction with the operating system and the programmes.

The HID interface is usually provided as a communication protocol through a USB (Universal Serial Bus) port. One of the advantages of the HID interface lies in the fact that, given the high number of devices that utilise it, it is natively supported by all operating systems and thus it is not necessary to install any drivers to utilise a device based thereon.

Not only the mouses utilise the HID interface: often, other devices obtained based thereon are graphic tablets used for drawing by hand and for the handwritten signature. Such devices transmit, in rapid repetition, the position of the pen on the drawing or signature surface, alongside accessory data, such as for example the pressure exerted by the hand on the pen and the instant of detection of each point, required for the detection of the speed and instantaneous pressure (graphometric data). The acquired signature, if complete with the graphometric data, is used as valid substitute of the handwritten signature, thus obtaining greater legal validity with respect to the signature on paper. For example US6307955 discloses a real time system for the two-directional storage and transmission of commands and data for a processor in the I/O process with external serial peripherals such as pen tablets. In some cases, transmission through USB/HID is also used for transmitting amounts of data greater than that regarding the position, speed and pressure and not only for transmission from a peripheral to a computer but also from a computer to a peripheral. For example, the graphometric signature tablet model DDD-F-11A created by PRB S.r.l. (Italian patent application in progress: RM2011A000370 and RM2011A000652) uses the same protocol for transmitting the images and text to be displayed on the screen before the signature from the PC to the table; the data usually displayed includes: the graphic logo of the organisation which uses the tablet (for example, the bank using it at the counter); the name and surname of the signing party; the date and time; the contents of the clause about to be signed (for example, the type and the bank transfer amount). The data, especially graphic data, have dimensions larger than those that can be accommodated in a normal HID packet: in this case, they can be divided into many small packets which, through a suitable protocol of higher level than HID, are re-incorporated from the reception side thereof.

A first problem of the method described above - widely used - lies in the fact that even if it comfortably overcomes the problem of establishing a USB communication simply and without developing, distributing, installing and using a special device driver for each operating system, it still reveals a problem in case of virtual environments described hereinafter.

The current computer technique provides innovative instruments, such as the remote computer emulation. This technique allows replacing a "physical" personal computer with a "virtual" one which lies in a remote server computer and connected in TCP/IP protocol through a network (Internet, Intranet, local network). The "physical" computer with which the operator interacts is replaced by a "stupid" terminal, without processing resources or provided with few basic resources (video, keyboard and mouse), which repeats the screen of the "virtual" remote computer and sends the types of the keyboard and the position of the mouse thereto.

When required to manage a local physical device, such as a signature tablet, the virtualization technique uses a local USB port which is however also "stupid": the data transmitted and received on the USB port are simply sent to the "virtual" machine in which the driver and the software which manage the communication lie.

For the quickest transmission possible, the display system must house a short HID packet for every larger TCP packet, thus the transmission is continuous but slow; an efficient transmission requires housing several HID packets for every TCP packet, hence the transmission is discontinuous.

The problem (solved with the method described hereinafter) arises when the "stupid" and the "virtual" terminal are connected to each other through a slow network, which can be the Internet or also a local network with high traffic. In this case, even the virtualised USB transmission reveals problems related to slowing down or even loss of data.

The slowing down, in case of a mouse, are felt because the cursor on the screen does not move smoothly but moves "jerking": though disturbing, this effect has no negative effects that can instead be observed when the USB-HID device is a signature tablet.

In order for the signature to be used validly as a graphological evidence, it is indispensable that it be complete, that each digitised point be complete with speed and pressure and, fundamental factor, that the "acquisition rate" be absolutely constant, so as to allow an exact calculation of speed and acceleration. This "rate" shall not be lesser than 200 points/second and in the best models it is even greater: in the previously mentioned model on behalf of PRB, it is equivalent to 400 points/second. If the slowing down, even temporary, of the USB-HID connection produces "jerks" or "gaps" in the acquisition, the effects are the deformation of the acquired signature, the lack of some sections and, ultimately, the unacceptability of the signature as graphological evidence.

Another problem arises when the HID communication is used for transmitting images from the computer to the signature tablet: given the need of dividing the data into numerous small packets, the transmission is rather slow even though the computer is not virtualised. The downloading of an image with dimensions equivalent to those of the entire screen of the tablet (for example, 480 x 272 pixels) may require a few seconds; this time becomes several seconds in a virtualised system: this waiting period is clearly excessive and unacceptable.

Thus, an object of the present invention is to provide a control exchange method between the processor and graphic tablet which overcomes the outlined problems regarding the interaction between the hardware peripheral provided for the detection of the client's signature and the computer, when the inter-work between the latter occurs from a remote station on a local network or intranet or even through the Internet.

Another object of the present invention is to provide a method for exchanging controls through a USB disc and relative devices which actuate the implementation thereof, which allow overcoming the problem regarding the correct operation in a virtualised environment, at a remote station or slow; and they also allow overcoming the problem regarding the data exchange speed, without introducing the need to obtain a dedicated USB protocol with the ensuing need of developing and installing a special device driver.

As a matter of fact, the intention is to create a method for exchanging controls through a USB disc and relative devices which allow the implementation thereof, based on common HW components. Thus, it is provided for using standard electronic components, at the level of directing the RAM, ROM, or Flash memory, with the aim of making new acquisition devices that are inexpensive, with high reliability and easy to use.

These objects are attained through an apparatus for the acquisition of the natural signature based on a digitiser tablet of the "Touch Screen" type whose interfacing with the computer dedicated to the processing of the acquired signature is characterised according to claim 1 outlined hereinafter. The dependent claims will allow outlining a series of alternatives for the implementation of the fundamental principle.

The method subject of the present invention completely overcomes the outlined problems, without requiring using special protocols and without requiring to install a device driver. The method consists in making a signature tablet similar to a "USB drive" removable disc, in other words like a " USB flash drive pen", a device that is very common and that can be used on all operating systems without requiring device drivers.

A device of this type is managed very differently with respect to a HID device:

1- The transmission in the two directions occurs at much larger blocks (for example 512 bytes against the 64 bytes of the HID)
2- The disc has a storage area that is practically large at will.

Examining these two points in detail, in the case where the USB portal is virtualised the data is forwarded through a packet network:

1- The size of a block of 512 bytes can be compared to that transmitted on a TCP/IP network and hence the transmission thereof occurs efficiently, contrary to the brief packet made of a few bytes (e.g. 64) used in the case of HID.
2- It is possible to create a disc with an area much larger than a packet and use it as a temporary memory ("buffer") for data awaiting transmission. Thus, this allows eliminating the possibility of loss of data even in case of slowing down in the transmission.

The solution subject of the patent comprises several technical solutions to be described hereinafter, which are mainly adopted for adapting a disco, a device created for memorising and storing static data, to serve as a transmission buffer.

It should be observed that the solution was conceived for replacing the communication section of the signature tablet with another functionally equivalent section. In particular, before the replacement, the tablet used to send - to the computer - the points of the signature progressively as they were acquired, and the programme receiving the signature in the computer displayed it in the screen in real time; this characteristic is useful for immediately revealing the problems that would require the repetition of the operation: for example, in the case of the person trying to sign inverting the name and surname with respect to the deposited signature or an abbreviated signature. Thus, there was excluded the solution that provided for the acquisition and the memorisation of the entire signature in the tablet, and the total delivery thereof to the computer only upon completion. Such solution, clearly more suitable with a mass storage device such as a USB disc, would imply the loss of a desired characteristic, such as the display of the signature during the acquisition and not only at the end. In the method described herein, the transmission occurs during the signature and, in case of slow transmission from the virtual or remote stationed machine, the operator on the computer observes, in the worst case, only a given delay in the display thereof.

Brief description of the drawings

With the sole aim of better describing the invention and without limiting the scope of protection and the fields of use thereof, the present invention shall now be described with reference to a series of particular but non-limiting embodiments, shown in the attached drawings, wherein:

Figure 1 is a diagram representing a solution different from the one according to the present invention.

Figure 2 is a diagram representing a solution according to the present invention.

Figure 3 is a schematic representation of a configuration of the external storage device and the methods of inter-work between the peripheral unit and the processor according to the present invention.

Figure 4 is a block diagram of the various sections forming the external storage device according to the prior art.

Figure 5 is a block diagram of the various sections forming the external storage device according to the present invention.

Figure 6 is a further schematic representation of a configuration of the external storage device and the methods of inter-work between the peripheral unit and the processor.

Figure 7 is a schematic representation of a further configuration of the external storage device and the methods of inter-work between the peripheral unit and the processor, for the image display functionality on the peripheral.

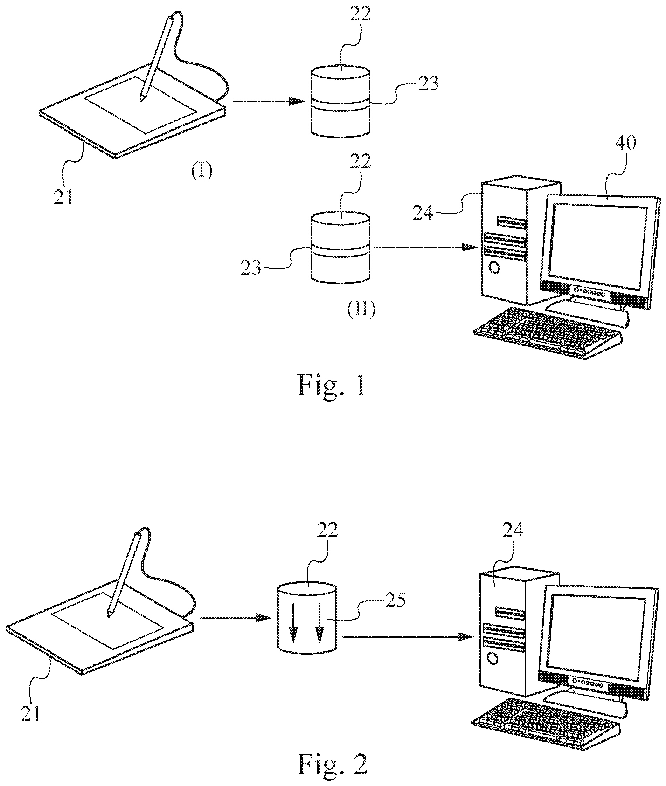

Figure 1 shows the operation of the solution (which was not adopted) which totally acquires the signature: during the signing step (I) the digitising tablet 21 memorises the signature data (position, speed, pressure, time), as they are progressively purchased, in the disc 22 in form of a file 23. The signature step ends when the signing party enters the confirmation, using the special key. At this point, there starts the downloading step (II) in which the computer 24 reads the file 23 from the disc 22; at the end of the reception of the file which contains the signature data, the computer 24 is capable of displaying the signature on the screen 40, at one go.

With the method described herein - regarding the Figure 2 -, instead, the digitizing tablet 21 sends the signature to a queue 25 of the FIFO (first in, first out) type in the disc 22; the computer 24 reads the data from the FIFO 25 progressively as they are available, and displays them on the screen with just the delay from the disc-computer communication, thus not with a delay equivalent to the entire duration of the signature.

The FIFO queue 25 of the circular type, is obtained in the disc exploiting the normal functions already present in the "file system" of all computers, so as not to absolutely require the obtainment of particular device drivers; in particular there are used:

- the common function which allows reading and writing any of the sectors into which the disc is divided,
- the possibility of sharing a file, i.e. open it, reading it and simultaneously write it in two different devices, in our case: the digitiser tablet 21 and the computer 24 with which it is connected.

For the two-directional tablet-computer communication, only one file - which is generated and made available according to the method described hereinafter - is used.

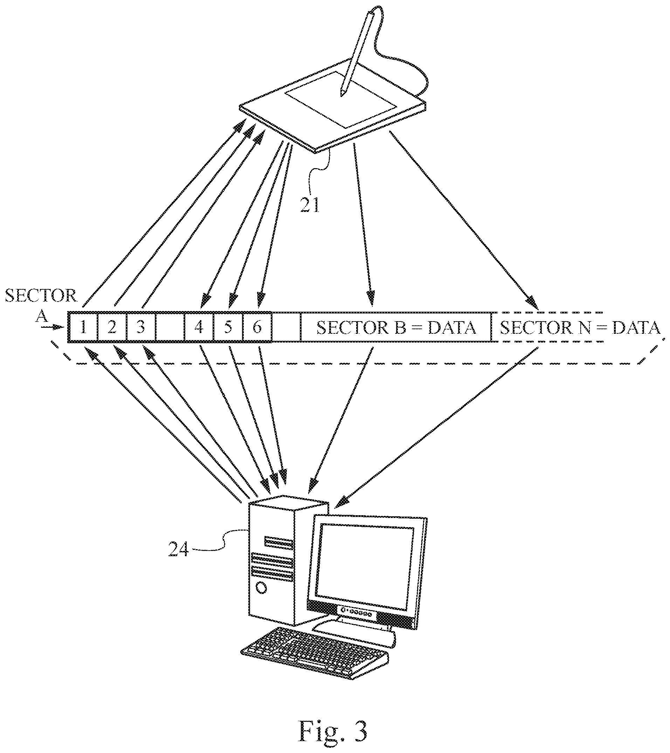

With reference to figure 3, the file, herein represented as a linear succession of data, is divided between the tablet 21 and the computer 24, which can both read and write it, at virtually coinciding times, according to the normal file sharing computer technique, through the implementation of dedicate traffic lights.

The first sector A of this file, outlined with a more marked contour in figure 3, is used for organising the FIFO queue created in the file.

The positions numbered in the first sector A of the disc have the following meaning:

1) = computer-to-tablet control
4) = response to the tablet-to-computer control
2) = pointer on the sector being read by the computer
3) = pointer on the point being read by the computer
5) = pointer on the sector being written by the tablet
6) = pointer on the point being written by the tablet.

The sectors - from the second to the last one, B, C...N - are instead used to contain the data of the acquired signature points: for example, in the case of a sector of 512 bytes and signature data composed by 8 bytes for every point, every sector may contain 512/8=64 signature points.

In order to start the signature operation, the computer 24 writes the relative control as a byte in the position of the first sector indicated with 1. The tablet 21, while idle, continuously reads this sector, thus as soon as it sees signature control in position 1, it starts to acquire the signature and communicates the acceptation of the control by writing the response, in form of a byte, in position 4; simultaneously in positions 2 and 5 it writes the number of the first sector of the disc data (the sector 2) and, in positions 3 and 6, number 1. The computer 24 sees the response to the control in position 4 and it is predisposed to display the signature to be executed by the signing party and acquired.

The tablet 21 acquires, at the speed given by the "acquisition rate" (400 times per second in this particular case), the signature points and progressively writes each of them in the sector directed by the pointer of the sector 5 and the pointer of the point 6. At each point it increases the pointer of point 6 and, when it exceeds the number of points that can be contained in a sector (e.g. 64), it zeroes the pointer of point 6 and increases the pointer of sector 5 by one unit. If the pointer of the sector exceeds the last sector of the disc, the tablet returns it to value 2, thus reutilising the first free sector which in the meanwhile shall already have been read by the computer (circular queue).

While the tablet writes the points with the described sequence, the computer 24 almost simultaneously sees that the pointer 6 or pointer 5 are different from pointers 3 and 2, hence it understands that there are points ready to be read; it reads each point from the disc in the operating memory thereof and increases the pointer 3. If the pointer 3 exceeds the number of points per sector (e.g. 64), it zeroes the pointer 3 and increases the pointer 2. The computer stops as soon as all points generated by the tablet have been read; this condition occurs when the increased pointer 3 reaches the same value of pointer 6 and pointer 2 reaches the same value of pointer 5.

It should be observed that the exact time sequence of the events does not affect the correctness of the performance of the data transfer operation in any manner whatsoever. Actually the tablet 21 solely writes pointers 5 and 6 while the computer 24 solely writes pointers 2 and 3. Thus, even though the access of the two devices occurs at asynchronous times and with any degree of superimposition, the data does not reveal any incoherence but delays at most.

If the acquisition by the computer 24 slows or stops for a given period of time, the tablet 21 continues writing the data in the file and updating the pointers; when the computer is available again, it recovers the delay and acquires the points suspended in FIFO 25, as long as the average reading speed is at least equivalent to the average writing speed.

As mentioned, added at the end of the file, the tablet resumes writing from the second sector thus reutilising the previously used area, as long as it has been freed in the computer in the meanwhile.

There are two particular conditions:

- empty FIFO: when pointer 2 = pointer 5 and pointer 3 = pointer 6
- full FIFO: when pointer 5 = pointer 2 minus 1.

Clearly, when the FIFO is empty the computer shall not read the points, and when the FIFO is full, the tablet cannot write it.

This last condition, in the normal operation, never occurs, given that the total dimension of the disc is selected to contain all points that may be accumulated in case of maximum computer reading delay. In the case of the example, a disc 32768 byte large, after subtracting the 512 bytes large sector used for the controls, contains 32256 bytes of useful data, i.e. 4032 signature points 8 bytes large each, equivalent to more than 10 seconds of active signature. A delay of more than ten seconds (too much for the current technique) in the acquisition by the computer is thus the maximum supported by such dimension of the disc.

Embodiment of the disc

In the particular exemplifying embodiment, the disc is obtained in the signature tablet and it exploits the same microcontroller that performs the other functions of the tablet: acquiring the signature, visualisation in the display, visualisation of acquisition keys for the actuation thereof.

The disc is obtained according to the computer technique common to all mass storage units of the USB type, commonly referred to as "Pen Drive" or "USB Disk". This technique is not described in detail given that it is commonly available and suitable for all normal operating systems such as Windows and other similar ones of the Unix (Linux, Mac OS, Android) type.

These devices obtain the USB Mass Storage Device class or MSD class based on the MSD protocol, an embodiment through the USB communication of the SCSI protocol. All these universally known protocols are regulated by official standards and suitable for operating systems without requiring particular configurations or installations. Same case applies for "remote" or "virtual" operating systems, that instantly support the mass storage units on the USB port.

The internal structure of the disc, which logically meets the FAT standard which has been in force over the last years and regulated by the ISO/IEC 9293 standard, was created originally. However, it was physically created originally, with the aim of solving some problems thereof and improving the performance thereof.

In particular, in the operating systems there is the possibility of modifying the dimensions of a file on a disc, cancel it or completely format the disc. The use of one of these functions, even accidental, would have disastrous consequences on the operation of the aforedescribed communication system, given that the deletion of the file would eliminate any possibility of communication between the computer and the tablet, while even only one variation of the dimension thereof during the operation would jeopardise the synchronisation between the transmission and reception function.

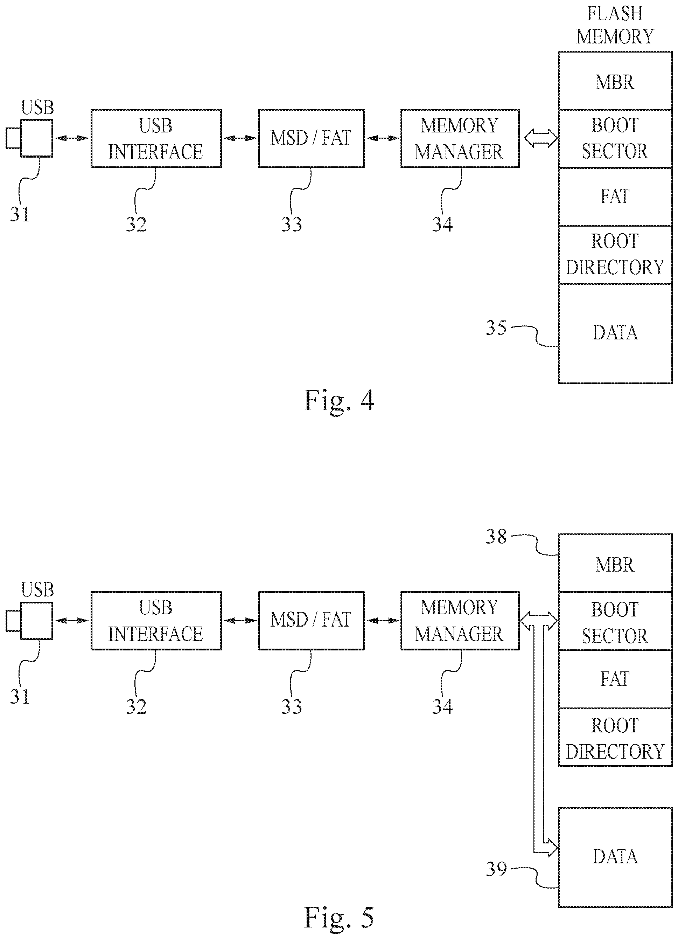

Figure 4 represents the structure of a common USB mass storage device available in the market, while figure 5 represents the structure obtained using the method described herein.

With reference to figure 4, in a normal USB mass storage device the USB connector 31 communicates with the interface block USB 32, which may in turn communicate with the block 33 which manages the MSD protocol towards the computer and also obtains the file system which is normally of the FAT (File Allocation Table) type available in the FAT12, FAT16 and FAT 32 types. The blocks 32, 33 and 34 are totally made of hardware or they can also be, fully or partly, obtained through a microcontroller programmed with a specific firmware. The memory physically containing the data is currently obtained through a memory of the Flash type (which can be deleted and re-written as blocks) indicated in the figure with number 35; in the past this memory was instead obtained using a magnetic medium such as for example a floppy disk.

The file system of the FAT type was conceived to allow all the normal operations of a disc storage device, thus it also provides for the creation and deletion of files, the variation of the dimensions of the file, the complete formatting of the disc. In particular, the allocation table referred to as FAT, which is also the name of the entire file system it is obtained from, is obtained so as to allow exploiting all the areas of the disc even in case of deletion of the files, increasing the dimensions of a previously present file, generating new files whose dimensions are incompatible with the existing empty spaces: actually, a file can be "scattered" in various areas of the disc, according to the technique for the deletion and reutilisation of the various sectors into which the disc is divided. If the files are scattered in the disc, we are talking of "fragmentation" of the file system.

The mass storage device described in figure 4 arranges all the FAT file system structures - referred to as MBR, Boot Sector, FAT, Root Directory and lastly the storage device containing the actual data, referred to as DATA - in the flash storage device. For example, if the computer connected to the USB port requires the variation of the dimensions of a file, the manager 33 of the FAT function provides for - through the storage manager 34 - modifying the FAT sector to reflect the new allocation of the data of the file in the DATA section. If it is required to delete a file, the manager 33 provides for, still through 34, re-writing the sector containing the Root Directory using the name of the invalidated file and it provides for re-writing the FAT sector so as to indicate the space that was initially occupied by the deleted file as free.

As mentioned, if we plan to use the disc for obtaining an exchange of controls, the functions of deleting, formatting and any variation of the allocation of the file in the DATA area must be absolutely avoided; thus, the method subject of the invention provides for a different structure which is indicated in figure 5.

While blocks 31, 32, 33, 34 have the same function as those of figure 4, the physical storage is obtained in two different blocks: block 38 which is obtained with a ROM (Read Only memory) and block 39 which is obtained with a RAM (Random Access Memory). The MBR, BOOT SECTOR, FAT and ROOT DIRECTORY sectors are written once and for all in a Read Only Memory ROM, thus every operation requiring the variation thereof (also accidental) has no effect and the disc always maintains the same structure, the same file list and the same allocation. The DATA area, indicated with 39, is instead obtained using a Random Access Memory RAM. A Random Access memory RAM is normally faster than a Flash memory, both as regards reading and - even much more - as regards re-writing; as a matter of fact the Flash memory requires the deletion of the sector before it can be re-written while on the Random Access Memory RAM there can also be re-written a byte at a time. Thus, the use of Random Access Memory RAM considerably fastens the response of the disc, which is an indispensable requirement if one plans to use it for transmitting controls.

In addition, all Flash memories have, in their life span, a maximum number of deletion cycles, after which they become non-utilisable forever. The number of deletions, in the order of one hundred thousand to a million, is sufficient for a mass storage, but it is extremely low for a control interface in which there are possible hundreds or thousands of re-writings per second. Thus, the use of the Random Access Memory RAM is the only possibility to allow this particular use of mass storage; the fact that the Random Access Memory RAM is volatile, i.e. it loses its contents once voltage is removed, does not create any problems due to the fact that the data lasts for a short period of time. As a matter of fact, the fact that the disc becomes "clean" once again upon starting is positive due to the fact that it definitely eliminates all residues of the previous operations which may not have been successful.

It should be observed that instead of having a Read Only Memory ROM, the block 38 may also be obtained with a Flash memory; in this case, in order to absolutely avoid the possibility of re-writing, the function of deleting sectors in which it is arranged is disabled permanently (hardware or firmware), thus obtaining the same behaviour as the Read Only Memory ROM and maintaining the advantage of being able to write the memory, only once in production, using a normal external programmer or using a special first programming firmware.

## Embodiment of the FAT

In the case of the control interface described herein, it was decided to use - for exchanging controls and data - only one file with the maximum dimension available in the Random Access Memory RAM used (in the case of the example, 32k or 32768 bytes). The FAT table was thus prepared, only once during the designing stage, so as to linearly arrange the file on the entire Random Access Memory RAM. Thus, the sectors of the disc are found in the Random Access Memory RAM one after the other in the exact growing succession; if the arrangement of the file were not fixed in the Read Only Memory ROM, the sectors could instead be found in a more or less scattered order according to the history of deletions and re-writings carried out previously.

The absolutely linear arrangement of the file has another major advantage described herein. In order to access the disc data, which - as mentioned - is shared between the computer and the signature tablet, both the computer and the tablet should be provided with FAT system file manager. The manager is rather complex and it requires a discrete amount of processing resources, which are definitely available in the computer, but they are quite expensive to obtain with the small microcontroller the graphic tablet is provided with; besides the initial effort required to obtain them, the execution of the FAT functions by the tablet would lead to high execution slowness. However, the linear arrangement of the sectors of the disc in the Random Access Memory RAM allows, on the side of the tablet 21, to completely avoid the use of a file system manager: in order to access any sector, the microcontroller only performs direct access to the Random Access memory RAM, after having calculated - through a simple multiplication - the address of the sector in the Random access Memory RAM. For example, in case of 512 byte sectors each numbered from zero onwards, the address of the sector in Random access Memory RAM is simply given by: Address = Number of sectors x 512.

Lastly, the particular adopted arrangement considerably allows saving as regards the overall solution and a better response speed. A test carried out in the particular exemplifying embodiment revealed that, using a Flash memory and a file system even on the side of the tablet, an elementary operation (writing and reading a sector on both sides) requires 120 milliseconds while, with the Random Access Memory RAM and without the tablet side file system, the same operation requires 3 milliseconds.

Now, following is the analysis of the embodiment of some of the typical functions of the tablet, besides acquiring and transmitting the signature indicated previously. Exchange of keys

Considering the same exchange of controls and transmission of data in case of acquisition of the signature, even all operating controls and the relative responses are exchanged through the same type of organisation based on a shared disc, possibly without using a FIFO data queue, but only using the controls exchanged in the first sector.

As an example of control, reference shall be made to the one regarding the exchange of cryptography keys.

An essential function of each valid tablet for the acquisition of signatures is that of the cryptography of the signed data, so as to prevent the interception of the USB communication. It is observable that a communication through FIFO queue on a disc, of the described type, is not easy to interpret as the continuous transmission of the position and pressure data used by a normal HID device. In addition, the described device provides for ciphering data well before the transmission thereof: ciphering is obtained with a symmetric algorithm, point by point, when each point of the just acquired signature is written in the Random Access Memory RAM which forms the sectors of the data exchange disc. Thus, any analysis of the data that passes in the USB connection does not allow the extraction of the signature.

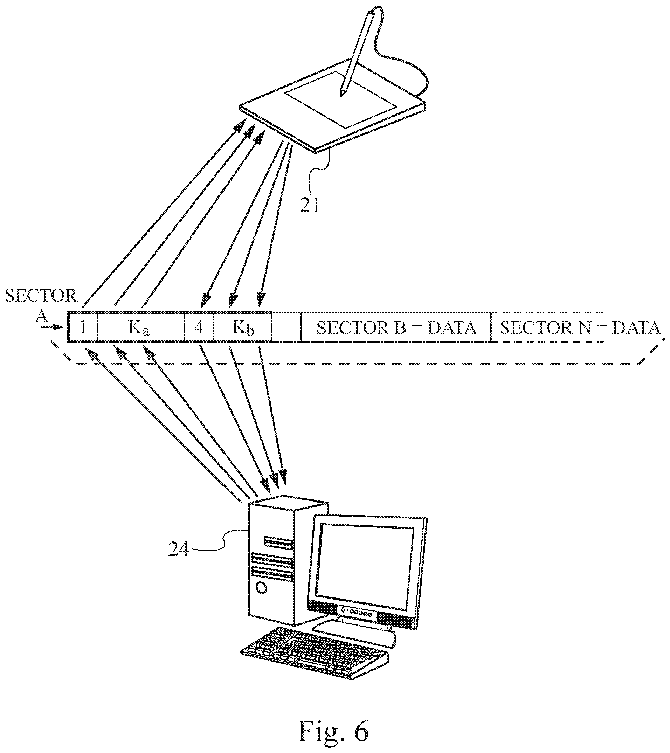

The ciphering key is renewed at each signature operation through the known cryptography protocol of the Diffie-Hellman type. As observable in figure 6, the computer writes - in position 1 of the first sector of the disc - the byte which indicates the key exchange control, and the casual key Ka thereof in the subsequent bytes. The tablet responds by introducing - in the byte at position 4 - the affirmative response to the received command, and then introducing the casual key Kb thereof. Immediately after both devices perform the operations provided for by the Diffie-Hellman algorithm thus generating the common symmetric cryptography key which is used in the subsequent signature operation. The exchange of keys requires only the reading and writing of a sector of the disc, which lasts just three miniseconds in the case of the example.

Display of the images

In the use of the signature tablet 21, the function which requires the transmission of the largest amount of data is that in which the computer 24 transmits an image which should be displayed in the screen of the tablet to the tablet 21. For example, in the case of an image of the dimension of 480 x 272 pixels with 65536 colours, each pixel implies the transmission of two bytes, hence the image occupies 480 x 272 x 2 = 262120 bytes.

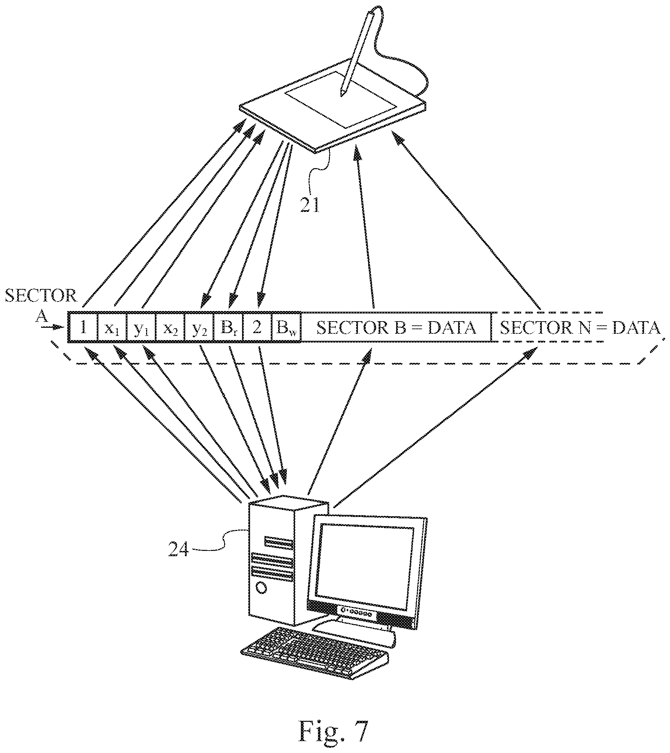

The method described herein provides for dividing the image data into blocks of the size equivalent to a sector of the disc, in the case of the example 512 bytes each. As observable in figure 7, the computer inserts the image display control byte in position 1 and - in the subsequent positions - the coordinates on the screen $(X_1,Y_1)$ and $(X_2,Y_2)$ of the two right upper and left lower angles of the image to be displayed. In addition, it zeroes the counter Bw of the written blocks and the counter Br of the read blocks. The tablet writes the response to the control in position 2.

Thus, the computer 24 starts writing - in the data sectors - the blocks into which the image was divided; the Bw increases for every written block. The tablet sees that Br is different from Bw and starts reading the data blocks and transfer. The Br increases at each block, and continues until Br becomes equal to Bw.

As mentioned, the blocks correspond to the sectors of the disc and they are consecutive; in order to obtain a circular FIFO queue there is utilised a simple formula which gives the sector number starting from the current block number:

$$Sector = 2 + Block \bmod Ns$$

Ns is the number of sectors of the disc available for the data; for example, in the case of the 32768 bytes disc with 512 byte sectors, and taking into account the fact that the first sector is used for the controls we obtain Ns = 32768/512 - 1 = 63.

The module operation automatically obtains the return to the first sector when the block arrives after the end of the disc.

Even in this case it is required to manage the following conditions:

- empty buffer Br=Bw
- full buffer Bw-Br=Ns

With buffer empty, the tablet stops reading; with the buffer full, the computer stops writing until the tablet frees some space. It should also be observed that, even in this case, regardless of the data reading and speed and the reading and writing order of the first sector which contains the counters, there is no possibility of corrupting the data due to the transmission slowing or dropping.

Upon receiving all data required to complete the image or - in other words when it manages to write the position pixel $(X_2,Y_2)$ the tablet 21 understands that it is the end of transmission of the image and removes the response thereof from the position 2 of the first sector. Thus, the computer detects that the transmission has been successful.

Advantages and industrial application of the invention

As outlined in the previous description, the method according to the present invention allows overcoming the main problem regarding the correct operation in a virtualised, remote or slow environment; it also allows overcoming the second problem, that is the data exchange speed, without requiring creating a personalised USB protocol with the ensuing need of developing and installing a special device driver. In addition the method overcomes other problems that occur when utilising a communication through mass storage, in particular that of preventing the cancellation of data or modification of the dimension of the used for communication.

The method, described herein for use as an interface for a signature tablet, may be advantageously utilised in many other computer applications in which a computer is required to dialogue with a peripheral, thus the field of protection of the present patent should not be deemed to limit the applications in the field of the signature tablet, but extended to all applications in which there is communication between a computer and a peripheral or external device.

**Claims**

1. Real time system for the two-directional memorisation and transmission of the controls and data for a processor (24) in the I/O process, with external serial peripherals (21) such as graphic tablets and/or digitisers for the handwritten signature, **characterised in that** it uses an external medium (22) for the memorisation of static data so as to constitute a transmission buffer capable of operating with the serial peripheral unit (21) and seen as a "USB drive" removable virtual disc, on such external medium (22) there being configured only one file constituted as a linear sequential succession of data in the constant dimension sectors, which can be shared between the serial peripheral unit (21) and the processor (24), which can both read it and write it, in parallel, thus defining an asynchronous I/O transmission with data block contents of the order a Kbyte and a memorisation area actually as large as desired, however definitely larger than a data packet, used as a temporary buffer for data awaiting to be transmitted, such file comprising:

   a- a first sector (A) with the following functional operating codes with a FIFO organisation of the I/O accesses:

   i. control (1) from a computer (24) to a serial peripheral unit (21),
   ii. response to the control (4) from a serial peripheral unit (21) to a computer (24),
   iii. pointer to the sector (2) being read by the computer (24),
   iv. pointer to the point (3) being read by the computer (24),
   v. pointer to the sector (5) being written by the serial peripheral unit (21),
   vi. pointer to the point (6) being written by the serial peripheral unit (21), and

   b- a series of sectors (B, C, D...N) subsequent to the first configured to have constant dimensions for the immediate access to the data contained therein.

2. Real time system for the two-directional memorisation and transmission of controls and data according to claim 1 **characterised in that** the virtualisation of the peripheral (21) which is interfaced through the USB drive functionalities is obtained within the same serial peripheral unit (21) for signature using, for managing the external memorisation support (22), the same microcontroller that manages the other functions of the serial peripheral unit, such as the acquisition of the track and the visualisation on the display.

3. Real time system for the two-directional memorisation and transmission of controls and data according to any of the preceding claims **characterised in that** the memory support (22) is constituted by a physical memory made of two distinct sections:

a- a block (38) obtained with a read-only ROM memory, with the MBR sectors, BOOT SECTOR, FAT and ROOT DIRECTORY written once and for all in said ROM memory, maintaining the external medium always as the same structure, the same list of files and the same allocation;

b- a series of DATA blocks (39), obtained with a write/read RAM memory, of the volatile type.

4. Real time system for the two-directional memorisation and transmission of controls and data according to the preceding claim **characterised in that** the read only memory (38), is obtained with a Flash memory, thus avoiding the possibility of rewriting, by permanently disabling the function of deleting the sectors in which it is arranged, thus operating with the functional mode equal to that of an ROM, writing on the memory, only once during production.

5. Real time system for the two-directional memorisation and transmission of controls and data according to any of the preceding claims **characterised in that** the FAT table of the memory support (22) is predisposed, only once during designing, so as to allocate said file in a linear manner on the entire RAM, the memory sectors being allocated in the RAM in a strictly increasing succession sequence.

6. Real time system for the two-directional memorisation and transmission of controls and data according to the preceding claim **characterised by** the linear allocation of the sectors into which the RAM memory is divided on the memory support (22) without using any file system manager, the microcontroller allowing direct access to any sector of the RAM, through the immediate addressing to the memory location obtained with the multiplication of the number of bytes occupied by each sector, with the sector number within the RAM and summing the offset regarding the entry point.

7. Real time method for the two-directional memorisation and transmission of controls and data based on a Hardware system according to the preceding claims **characterised in that** it comprises the following operating steps regarding the acquisition process:

a) the digitiser serial peripheral unit (21) predisposes the sending of the data to be acquired in input to a FIFO queue (25) in the external medium (22) through:

a-1) the configuration of only one file constituted as a linear sequential succession of data, in sectors of constant dimensions, which can be shared, between the serial peripheral unit (21) and the processor (24), both of which can be parallel, read and write, on said file,

a-2) the insertion in the first sector of such file, for the organisation of the FIFO queue within the file, of the following operating codes:

i. control (1) from the computer (24) to the serial peripheral unit (21),
ii. response to the control (4) from the serial peripheral unit (21) to the computer (24),
iii. pointer to the sector (2) being read by the computer (24),
iv. pointer to the point (3) being read by the computer (24),
v. pointer to the sector (5) being written by the serial peripheral unit (21),
vi. pointer to the point (6) being written by the serial peripheral unit (21),

b) the processor (24) reads the data from the FIFO (25) as the latter is acquired from the output of the peripheral unit (21), and visualises it on the display with the sole delay given by the computer memory support communication, without delays attributable to an acquisition process based on the entire duration of the input on the peripheral (21), the access to the sectors of the file (B, C, ...N) from the second to the last configured to contain the data of the points detected by the peripheral unit (21) occurring instantly.

8. Real time method for two-directional memorisation and transmission of controls and data according to any of the preceding method claims **characterised in that** in order to activate the digital data detection operations:

I- the processor (24) writes the relative control as a byte in the position of the first sector (1);
II- the serial peripheral unit (21), given that it is inoperative, continuously reads such first sector (1) as soon as it sees the control introduced into said first position start acquiring the data in input and communicates the acceptation of the control by writing the response, in form of a byte, in the position (4);
III- parallel in positions (2) and (5) it writes the number of the first data sector of the memory external medium and activates positions (3) and (6);
IV- the processor (24) sees the response to the control in position (4) and predisposes to visualise the track that shall be fixed - by the user - and acquired;

V- the serial peripheral unit (21) acquires the points of the track and progressively inserts each one of them in the sector addressed by the sector pointer (5) and by the point pointer (6);

VI- for each point provided in input, the peripheral unit increases the point pointer (6) and, when it exceeds the number of points that can be contained in a sector, it zeroes the point pointer (6) and increases the sector pointer (5) by one unit;

VII- if the sector pointer exceeds the last sector of the external memorisation support, the serial peripheral unit (21) returns it to the initial value, thus reutilising the first free sector which in the meanwhile shall already have been read by the computer,

and **in that** while the serial peripheral unit (21) acquires the points in input with the I-VII sequence, actually parallel from the processor (24) the following operating steps are performed:

a- the processor (24) sees that the pointer (6) or the pointer (5) are different from pointers (3) and (2), and thus detects that there are points ready to be read;

b- the processor (24) reads each point from the external memory support, in the operating memory thereof and increases the pointer (3);

c- should the pointer (3) exceed the number of points per sector, the processor (24) zeroes the pointer (3) and increases the pointer (2);

d- the processor stops as soon as all points generated by the serial peripheral unit have been read, this condition occurring when the increased pointer (3) reaches the same value of the pointer (6) and the pointer (2) reaches the same value of the pointer (5);

the correctness of the performance of the data transfer operation not depending on the exact time sequence of the events, **in that** the serial peripheral unit (21) only writes on pointers (5) and (6) while the processor (24) only writes on pointers (2) and (3).

9. Real time method for two-directional memorisation and transmission of controls and data according to any of the preceding method claims **characterised in that** should the acquisition by the processor (24) slow or cease for a given period of time, the serial peripheral unit (21) continues writing the data in the file and updating the pointers, recovering the delay and acquiring the points suspended in the FIFO, when the processor becomes available again.

10. Real time method for two-directional memorisation and transmission of controls and data according to the preceding method claims **characterised in that** according to the limit functional conditions:

i. FIFO queue empty: when the pointer (2) = pointer (5) and pointer (3) = pointer (6)

ii. FIFO queue full: when the pointer (5) = pointer (2) less than 1,

upon reaching the end of the file, the serial peripheral unit (21) resumes writing from the second sector thus re-utilising the previously used area, as long as it has been freed from the processor in the meanwhile.

11. Real time method for two-directional memorisation and transmission of controls and data according to the preceding method claims **characterised in that** it provides the ciphering of the data before the transmission thereof, obtaining it with a symmetric algorithm, point per point of the track in input, at the same point when every point of the track, just previously acquired, is written in the RAM which forms the sectors of the data exchange disc, the ciphering key being renewed at each signature operation through the dedicated cryptography protocol, by performing the following operating steps:

a- according to a dedicated configuration of the operating codes the processor (24) writes - in the position (1) of the first sector of the disc - the byte the key exchange control, and its random key (Ka) in the subsequent bytes,

b- the serial peripheral unit (21) responds by inserting, in the byte at position (4), the affirmative response to the received control, and inserting its random key (Kb) subsequently;

c- subsequently the two devices immediately perform the operations provided by the cryptography algorithm generating the symmetric cryptography common key which is used in the subsequent signature operation.

12. Real time method for two-directional memorisation and transmission of controls and data according to any of the preceding method claims **characterised in that** the functionality of visualising the images on the I/O peripheral (21) provides for a dedicated configuration of the operating codes with the following operating steps:

a- the division of the image data into blocks of dimension equivalent to a sector of the disc, the processor inserting - in the first position - the image visualisation control byte and - in the subsequent positions - the coordinates on the screen $(X_1,Y_1)$ and $(X_2,Y_2)$ the two upper right lower left angles of the image to be displayed, thus the counter (Bw) of the written blocks and the counter (Br) of the read blocks is zeroed;

b- the writing - by the serial peripheral unit (21) - of the response to the control in the relative position (2), the processor starting to write - in the data sectors - the blocks into which it divided the image, for each written block increasing the counter of the written blocks (Bw), wherein the serial peripheral unit seeing that the counter of the read blocks (Br) is different from the counter of the written blocks (Bw) and starting to read the data blocks and transfer them to the display, increasing the counter of the read blocks (Br) at each counter, and continuing until the counter of the read blocks (Br) becomes equal to the counter of the written blocks (Bw).

c- the serial peripheral unit, upon receiving all the data required to complete the image, writing the position pixels $(X_2,Y_2)$, understands that the end of transmission of the image has been reached and removes its response from the position (2) of the first sector, the processor in turn detecting that the transmission has been successful.

13. Real time method for two-directional memorisation and transmission of controls and data according to any of the preceding method claims **characterised in that** the allocation of said consecutive blocks corresponding to the sectors of the disc operates according to a circular FIFO queue, the current number of the sector being obtained starting from the current number of the block as

$$Sector = 2 + Block \bmod Ns$$

Ns being the number of sectors of the disc available for the data; and the module operation automatically obtaining the return to the first sector when the pointer to the block exceeds the termination of the external memory support, considering the limit conditions of:

i. buffer empty, counter of the read blocks (Br)= counter of the written blocks (Bw)
ii. buffer full, counter of the written blocks (Bw) - counter of the read blocks (Br)=Ns,

hence respectively:

a- with the buffer empty, the serial peripheral unit ceases reading;
b- with the buffer full, the processor ceases writing until the serial peripheral unit clears the space.

**Patentansprüche**

1. Echzeitsystem für die bidirektionale Speicherung und Übertragung der Steuerungen und Daten für einen Prozessor (24) in dem I/O-Prozess mit externen seriellen Peripheriegeräten (21) wie beispielsweise Grafiktabletts und/oder Digitalisierern für die handschriftliche Signatur, **dadurch gekennzeichnet, dass** es für die Speicherung statischer Daten ein externes Medium (22) verwendet, um einen Übertragungspuffer zu bilden, der dazu in der Lage ist, mit der seriellen Peripherieeinheit (21) zu arbeiten, und der als virtuelle entfernbare "USB Laufwerk"-Scheibe gesehen wird, wobei auf einem derartigen externen Medium (22) nur eine Datei, die als lineare sequentielle Folge von Daten in den Sektoren konstanter Dimension beschaffen ist, die von der seriellen peripheren Einheit (21) und dem Prozessor (24), die sie beide parallel lesen und schreiben können, gemeinsam genutzt werden können und dadurch eine asynchrone I/O-Übertragung mit Datenblockinhalten in der Größenordnung eines Kbytes und einem Speicherbereich, der tatsächlich so groß wie gewünscht aber auf jeden Fall größer als ein Datenpaket ist, definieren, konfiguriert ist, das als temporärer Puffer für Daten, die darauf warten, übertragen zu werden, dient, wobei eine derartige Datei aufweist:

a- einen ersten Sektor (A) mit den folgenden funktionellen Arbeitscodes mit einer FIFO-Organisation der I/O-Zugriffe:

i. Steuerung (1) von einem Computer (24) an eine serielle Peripherieeinheit (21),
ii. Antwort auf die Steuerung (4) einer seriellen Peripherieeinheit (21) an einen Computer (24),
iii. Zeiger auf den durch den Computer (24) gelesenen Sektor (2),
iv. Zeiger auf die durch den Computer (24) gelesene Stelle (3),
v. Zeiger auf den durch die Peripherieeinheit (21) beschriebenen Sektor (5),
vi. Zeiger auf die durch die Peripherieeinheit (21) beschriebene Stelle (6), und

b- eine Folge von Sektoren (B, C, D...N), die dem ersten nachfolgen und die so ausgebildet sind, dass sie konstante Dimensionen aufweisen, für den sofortigen Zugriff auf die auf die darin enthaltenen Daten.

2. Echzeitsystem für die bidirektionale Speicherung und Übertragung der Steuerungen und Daten gemäß Anspruch 1, **dadurch gekennzeichnet, dass** die Virtualisierung des Peripheriegeräts (21), das durch die USB-Laufwerksfunktionalitäten gekoppelt ist, innerhalb derselben Peripherieeinheit (21) für die Signatur unter Verwendung desselben Mikrocontrollers, der die anderen Funktionen der seriellen Peripherieeinheit wie beispielsweise die Erfassung der Spur und die Visualisierung auf der Anzeige erlangt wird, um die externe Speicherungsunterstützung (22) zu erlangen.

3. Echzeitsystem für die bidirektionale Speicherung und Übertragung der Steuerungen und Daten gemäß einem der vorangehenden Ansprüche, **dadurch gekennzeichnet, dass** die Speicherunterstützung (22) durch einen physikalischen Speicher aus zwei verschiedenen Abschnitten gebildet ist:

a- einen Block (38) erhalten mit einem nur-lesbaren ROM-Speicher mit MBR-Sektoren, einem BOOT-SEKTOR, einer FAT und einem ROOT-VERZEICHNIS, die endgültig in den genannten ROM-Speicher geschrieben sind, wobei das externe Medium immer als dieselbe Struktur, dieselbe Liste von Dateien und dieselbe Allokation beibehalten wird;

b- eine Reihe von DATEN-Blöcken (39) erhalten mit einem flüchtigen Schreib-/Lese-RAM-Speicher.

4. Echzeitsystem für die bidirektionale Speicherung und Übertragung der Steuerungen und Daten gemäß dem vorangehenden Anspruch, **dadurch gekennzeichnet, dass** der nur-lesbare ROM-Speicher mit einem Flash-Speicher erzielt wird und dadurch die Möglichkeit des erneuten Schreibens vermieden wird, indem die Funktion des Löschens der Sektoren, in denen er angeordnet ist, permanent deaktiviert ist, und somit mit der funktionalen Betriebsweise, die gleich der eines ROMs ist, arbeitet, indem nur ein einziges Mal während der Herstellung auf den Speicher geschrieben wird.

5. Echzeitsystem für die bidirektionale Speicherung und Übertragung der Steuerungen und Daten gemäß einem der vorangehenden Ansprüche, **dadurch gekennzeichnet, dass** die FAT-Tabelle der Speicherunterstützung (22) nur einmal während der Gestaltung prädisponiert wird, um die genannte Datei auf eine lineare Wiese auf das gesamte RAM zu verteilen, wobei die Speichersektoren in dem RAM auf eine streng ansteigende Reihenfolge alloziert werden.

6. Echzeitsystem für die bidirektionale Speicherung und Übertragung der Steuerungen und Daten gemäß dem vorangehenden Anspruch, **gekennzeichnet durch** die lineare Allokation der Sektoren, in die der RAM-Speicher auf der Speicherunterstützung (22) aufgeteilt wird, ohne die Verwendung eines Dateisystemmanagers, wobei dem Mikrocontroller durch die sofortige Adressierung der Speicherstelle, die erhalten wird durch die Multiplikation der Anzahl der durch jeden Sektor belegten Bytes mit der Sektorenzahl innerhalb des RAMs und das Summieren des Offsets in Bezug auf die Einspruchstelle, ein direkter Zugriff auf jeden Sektor des RAMs erlaubt ist.

7. Echtzeitverfahren für die bidirektionale Speicherung und Übertragung von Steuerungen und Daten basierend auf einem Hardware-System gemäß den vorangehenden Ansprüchen, **dadurch gekennzeichnet, dass** es in Bezug auf den Erfassungsprozess die folgenden Arbeitsschritte aufweist:

a) die serielle Digitalisierer-Peripherieeinheit (21) prädisponiert das Senden der Daten, die in einem Eingang einer FIFO-Schlange (25) zu erfassen sind, dem externen Medium (22) durch:

a-1) die Konfiguration von nur einer Datei, die als lineare sequentielle Folge von Daten in Sektoren konstanter Dimensionen, die von der seriellen Peripherieeinheit (21) und dem Prozessor, die beide parallel auf der genannten Datei lesen und schreiben können, gemeinsam genutzt werden können, beschaffen ist,

a-2) das Einfügen der folgenden Arbeitscodes in den ersten Sektor einer derartigen Datei zur Organisation der FIFO-Schlange innerhalb der Datei:

i. Steuerung (1) von einem Computer (24) an die serielle Peripherieeinheit (21),

ii. Antwort auf die Steuerung (4) der seriellen Peripherieeinheit (21) an den Computer (24),

iii. Zeiger auf den durch den Computer (24) gelesenen Sektor (2),

iv. Zeiger auf die durch den Computer (24) gelesene Stelle (3),

v. Zeiger auf den durch die Peripherieeinheit (21) beschriebenen Sektor (5),

vi. Zeiger auf die durch die Peripherieeinheit (21) beschriebene Stelle (6),

b) der Prozessor (24) liest die Daten von dem FIFO (25), wenn letztere von dem Ausgang der Peripherieeinheit (21) erfasst werden, und visualisiert sie mit der einzigen Verzögerung, die durch die Kommunikation der Computerspeicherunterstützung gegeben ist, ohne Verzögerungen, die einem Erfassungsprozess, der auf der gesamten Dauer der Eingabe an das Peripheriegerät (21), zuzurechnen sind, wobei der Zugriff auf die Sektoren der Datei (B, C, ...N) vom zweiten bis zum letzten, die so konfiguriert sind, dass sie Daten der durch die Peripherieeinheit (21) detektierten Stellen enthält, unverzüglich erfolgt.

8. Echtzeitverfahren für bidirektionale Speicherung und Übertragung von Steuerungen und Daten basierend auf einem Hardware-System gemäß einem der vorangehenden Verfahrensansprüche, **dadurch gekennzeichnet, dass**, um die Operationen zur Detektion digitaler Daten zu aktivieren:

I- der Prozessor (24) die relative Steuerung als Byte an die Stelle des ersten Sektors (1) schreibt;

II- die serielle Peripherieeinheit (21), vorausgesetzt, dass sie inoperativ ist, einen derartigen Sektor fortlaufend liest, sobald sie sieht, dass die in die genannte erste Position gebrachte Steuerung beginnt, die Daten in dem Eingang zu erfassen, und kommuniziert die Annahme der Steuerung durch Schreiben der Antwort in die Position (4) in Form eines Bytes;

III- sie in Positionen (2) und (5) parallel die Nummer des ersten Datensektors des externen Speichermediums schreibt und Positionen (3) und (6) aktiviert;

IV- der Prozessor (24) die Antwort auf die Steuerung in Position (4) sieht und prädisponiert, um die Spur zu visualisieren, die - durch den Anwender - festgelegt und erfasst werden soll;

V- die serielle Peripherieeinheit (21) die Stellen der Spur erfasst und fortschreitend jede von ihnen in den durch den Sektor-Zeiger (5) den Stellenzeiger (6) adressierten Sektor einfügt;

VI- die Peripherieeinheit den Stellenzeiger (6) für jede in dem Eingang bereitgestellte Stelle erhöht und, wenn er die Anzahl von Stellen, die in einem Sektor enthalten sein können, übersteigt, den Stellenzeiger (6) auf Null setzt und den Sektorzeiger (5) um eine Einheit erhöht;

VII- die Peripherieeinheit (21), wenn der Sektorzeiger den letzten Sektor der externen Speicherungsunterstützung übersteigt, zu dem Anfangswert zurückkehrt und dadurch den ersten freien Sektor, der zwischenzeitlich durch den Computer gelesen sein soll, wiederverwendet, und dadurch, dass während die serielle Peripherieeinheit (21) die Stellen in der Eingabe mit der I-VII-Folge erfasst, tatsächlich die folgenden Arbeitsschritte ausgeführt werden:

a- der Prozessor (24) sieht, dass sich der Zeiger (6) oder der Zeiger (5) von den Zeigern (3) und (2) unterscheiden, und detektiert somit, dass es zum Lesen bereite Stellen gibt;

b- der Prozessor (24) liest jede Stelle von der externen Speicherunterstützung in dem Arbeitsspeicher hiervon und erhöht den Zeiger (3);

c- der Prozessor (24), sollte der Zeiger (3) die Anzahl von Stellen pro Sektor überschreiten, den Zeiger (3) auf Null setzt und den Zeiger (2) erhöht;

d- der Prozessor, sobald sämtliche durch die serielle Peripherieeinheit erzeugten Stellen gelesen wurden, stoppt, wobei dieser Zustand auftritt, wenn der erhöhte Zeiger (3) denselben Wert des Zeigers (6) erreicht und der Zeiger (2) denselben Wert des Zeigers (5) erreicht; wobei die Korrektheit der Performance der Datenübertragungsoperation insofern nicht von den exakten Zeitfolge der Ereignisse abhängt, als die serielle Peripherieeinheit (21) nur auf die Zeiger (5) und (6) schreibt, währen der Prozessor (24) nur auf die Zeiger (2) und (3) schreibt.

9. Echtzeitverfahren für bidirektionale Speicherung und Übertragung von Steuerungen und Daten gemäß einem der vorangehenden Verfahrensansprüche, **dadurch gekennzeichnet, dass**, falls sich die Erfassung durch den Prozessor (24) für eine gegebene Zeitdauer verlangsamt oder aufhört, die serielle Peripherieeinheit (21) weitermacht, Daten in die Datei zu schreiben und die Zeiger zu akutalisieren, wobei sieh die Verzögerung gutmacht und die in dem FIFO hängenden Stellen erfasst, wenn der Prozessor wieder verfügbar wird.

10. Echtzeitverfahren für bidirektionale Speicherung und Übertragung von Steuerungen und Daten gemäß den vorangehenden Verfahrensansprüchen, **dadurch gekennzeichnet, dass** die serielle Peripherieeinheit (21) gemäß den funktionalen Grenzzuständen:

i. FIFO-Schlange leer: wenn der Zeiger (2) = Zeiger (5) und Zeiger (3) = Zeiger (6)

ii. FIFO-Schlange voll: wenn der Zeiger (5) = Zeiger (2) kleiner als 1,

beim Erreichen des Dateiendes damit weitermacht, Daten von dem zweiten Sektor zu schreiben und damit den vorangehend verwendeten Bereich wiederzuverwenden, sofern er zwischenzeitlich von dem Prozessor befreit wurde.

11. Echtzeitverfahren für bidirektionale Speicherung und Übertragung von Steuerungen und Daten gemäß den vorangehenden Verfahrensansprüchen, **dadurch gekennzeichnet, dass** es die Verschlüsselung der Daten vor deren Übertragung mit einem symmetrischen Algorithmus Stelle für Stelle der Spur im Eingang, an derselben Stelle, wenn jede Stelle der vorangehend erfassten Spur in das RAM, das die Sektoren der Datenaustauschscheibe bildet, geschrieben wird, bereitstellt, wobei der Verschlüsselungs-Schlüssel bei jeder Signaturoperation durch das zugehörige Kryptographieprotokoll erneuert wird, indem folgende Arbeitsschritte ausgeführt werden:

a- gemäß einer zugehörigen Konfiguration der Arbeitscodes schreibt der Prozessor - an die Stelle (1) des ersten Sektors der Scheibe - das Byte der Schlüsselaustauschsteuerung, und seinen Zufallsschlüssel (Kondensatoranschluss) in die nachfolgenden Bytes,

b- die serielle Peripherieeinheit (21) antwortet, indem sie in das Byte an Stelle (4) die bestätigende Antwort auf die empfangene Steuerung einfügt und nachfolgend ihren Zufallsschlüssel (Kb) einfügt;

c- nachfolgend die beiden Einrichtungen unverzüglich durch den Kryptographiealgorithmus bereitgestellte Operationen, durchführen und dabei den gemeinsamen symmetrischen Kryptographieschlüssel erzeugen, der bei der nachfolgenden Verschlüsselungsoperation verwendet wird.

12. Echtzeitverfahren für bidirektionale Speicherung und Übertragung von Steuerungen und Daten gemäß einem der vorangehenden Verfahrensansprüche, **dadurch gekennzeichnet, dass** die Funktionalität der Verschlüsselung der Bilder auf dem I/O-Peripheriegerät (21) eine zugehörige Konfiguration der Arbeitscodes mit den folgenden Arbeitsschritten bereitstellt:

a- das Aufteilen der Bilddaten in Blöcke mit einer Dimension, die einem Sektor der Scheibe entspricht, wobei der Prozessor - in der ersten Position - das Bildvisualisierungssteuerungsbyte und - in den nachfolgenden Positionen - die Koordinaten der beiden oberen rechten und unteren linken Winkel des anzuzeigenden Bildes auf dem Schirm $(X_1, Y_1)$ und $(X_2, Y_2)$ einfügt, so dass der Zähler (Bw) der geschriebenen Blöcke und der Zähler (Br) der gelesenen Blöcke auf null gesetzt wird;

b- das Schreiben der Antwort auf die Steuerung in der relativen Stelle (2) durch die serielle Peripherieeinheit (21), wobei der Prozessor - in die Datensektoren - die Blöcke, in die er das Bild aufgeteilt hat, zu schreiben beginnt, wobei er für jeden geschriebenen Block den Zähler der geschriebenen Blöcke (Bw) erhöht, wobei die serielle Peripherieeinheit, wenn sie sieht, dass sich der Zähler der gelesenen Blöcke (Br) vom den Zähler der geschriebenen Blöcke (Bw) unterscheidet, und beginnt, die Datenblöcke zu lesen und sie an die Anzeige zu übertragen, den Zähler der gelesenen Blöcke (Br) an jedem Zähler erhöht, und weitermacht, bis der Zähler der gelesenen Blöcke (Br) gleich dem Zähler der geschriebenen Blöcke (Bw) wird;

c- wobei die serielle Peripherieeinheit auf den Empfang sämtlicher Daten, die erforderlich sind, um das Bild zu vervollständigen, hin, wenn sie die Positionspixel $(X_2, Y_2)$ schreibt, versteht, dass das Ende der Übertragung des Bilds erreicht wurde und seine Antwort von der Stelle (2) des ersten Sektors entfernt, worauf der Prozessor detektiert, dass die Übertragung erfolgreich war.

13. Echtzeitverfahren für bidirektionale Speicherung und Übertragung von Steuerungen und Daten gemäß einem der vorangehenden Verfahrensansprüche, **dadurch gekennzeichnet, dass** die Allokation der genannten aufeinanderfolgenden Blöcke, die den Sektoren der Scheibe entsprechen, gemäße einer ringförmigen FIFO-Schlange arbeitet, wobei die gegenwärtige Nummer des Sektors, der, beginnend bei der gegenwärtigen Nummer des Blocks gemäß

$$\text{Sektor} = 2 + \text{Block mod Ns}$$

erhalten wird, wobei Ns die Anzahl von für die Daten verfügbaren Sektoren der Scheibe ist; und die Modulooperation automatisch die Rückgabe des ersten Sektors erzielt, wenn der Zeiger auf den Block das Ende der externen Speicherunterstützung erreicht, wobei folgende Grenzzustände berücksichtigt werden:

i. Puffer leer, Zähler der gelesenen Blöcke (Br) = Zähler der geschriebenen Blöcke (Bw)
ii. Puffer voll, Zähler der geschriebenen Blöcke (Bw) - Zähler der gelesenen Blöcke (Br) = Ns,

folglich

a- bei leerem Puffer hört die serielle Peripherieeinheit auf, zu lesen; bzw.
b- bei vollem Puffer hört der Prozessor auf, zu schreiben, bis die serielle Peripherieeinheit den Platz freigibt.

## Revendications

1. Système en temps réel pour la mémorisation et la transmission bidirectionnelles des commandes et des données pour un processeur (24) dans le traitement E/S, avec des périphériques série externes (21) tels que des tablettes graphiques et/ou des numériseurs pour la signature manuscrite, **caractérisé en ce qu'**il utilise un support externe (22) pour la mémorisation de données statiques de manière à constituer un tampon de transmission pouvant fonctionner avec l'unité périphérique série (21) et vu comme un disque virtuel amovible de type « clé USB », sur ledit support externe (22) étant configuré un seul fichier constitué d'une succession séquentielle linéaire de données dans des secteurs de dimension constante, qui peut être partagé entre l'unité périphérique série (21) et le processeur (24), lesquels peuvent chacun le lire et l'écrire, en parallèle, définissant ainsi une transmission E/S asynchrone avec des contenus de blocs de données de l'ordre du kilooctet et une zone de mémorisation effectivement aussi étendue que nécessaire, mais assurément plus grande qu'un paquet de données, utilisée comme tampon provisoire pour des données en attente d'être transmises, ledit fichier comprenant :

a) un premier secteur (A) avec les codes de fonctionnement suivants avec une organisation FIFO des accès E/S :

i. commande (1) d'un ordinateur (24) à une unité périphérique série (21),
ii. réponse à la commande (4) d'une unité périphérique série (21) à un ordinateur (24),
iii. pointeur vers le secteur (2) en train d'être lu par l'ordinateur (24),
iv. pointeur vers le point (3) en train d'être lu par l'ordinateur (24),
v. pointeur vers le secteur (5) en train d'être écrit par l'unité périphérique série (21),
vi. pointeur vers le point (6) en train d'être écrit par l'unité périphérique série (21), et

b) une série de secteurs (B, C, D...N) consécutifs au premier et conçus pour avoir des dimensions constantes afin de permettre un accès immédiat aux données qu'ils contiennent.

2. Système en temps réel pour la mémorisation et la transmission bidirectionnelles de commandes et de données selon la revendication 1, **caractérisé en ce que** la virtualisation du périphérique (21) qui est accessible au travers des fonctionnalités de clé USB s'obtient dans la même unité périphérique série (21) que pour la signature en utilisant, pour gérer le support de mémorisation externe (22), le même microcontrôleur que celui qui gère les autres fonctions de l'unité périphérique série, telles que l'acquisition de la piste et la visualisation sur le dispositif d'affichage.

3. Système en temps réel pour la mémorisation et la transmission bidirectionnelles de commandes et de données selon l'une quelconque des revendications précédentes, **caractérisé en ce que** le support mémoire (22) est constitué d'une mémoire physique faite de deux parties distinctes :

a) un bloc (38) obtenu avec une mémoire morte (ROM), avec les secteurs MBR, le secteur de démarrage (BOOT), la table d'allocation des fichiers (FAT) et le répertoire racine (ROOT) enregistrés une fois pour toutes dans ladite mémoire morte, le support externe conservant toujours la même structure, la même liste de fichiers et la même allocation ;
b) une série de blocs de données (39), obtenus avec une mémoire vive accessible en lecture/écriture, du type volatil.

4. Système en temps réel pour la mémorisation et la transmission bidirectionnelles de commandes et de données selon la revendication précédente, **caractérisé en ce que** la mémoire morte (38) s'obtient avec une mémoire flash, ce qui évite la possibilité d'une réécriture, en désactivant définitivement la fonction de suppression des secteurs dans lesquels elle est agencée, et en fonctionnant de ce fait sur un mode de fonctionnement identique à celui d'une mémoire morte, en écrivant dans la mémoire une seule fois pendant la production.

5. Système en temps réel pour la mémorisation et la transmission bidirectionnelles de commandes et de données selon l'une quelconque des revendications précédentes, **caractérisé en ce que** la table FAT du support mémoire (22) est prédisposée, une seule fois pendant sa conception, pour allouer ledit fichier de manière linéaire sur l'ensemble de la mémoire vive, les secteurs de mémoire étant alloués dans la mémoire vive selon une séquence de succession strictement croissante.

6. Système en temps réel pour la mémorisation et la transmission bidirectionnelles de commandes et de données selon la revendication précédente, **caractérisé par** l'allocation linéaire des secteurs dans lesquels la mémoire vive est divisée sur le support mémoire (22) sans utilisation d'un quelconque gestionnaire de système de fichiers, le microcontrôleur ayant directement accès à n'importe quel secteur de la mémoire vive, au travers de l'adressage direct vers l'emplacement mémoire obtenu avec la multiplication du nombre d'octets occupés par chaque secteur, avec le numéro de secteur dans la mémoire vive et la somme du décalage concernant le point d'entrée.

7. Système en temps réel pour la mémorisation et la transmission bidirectionnelles de commandes et de données basées sur un système matériel selon les revendications précédentes, **caractérisé en ce qu'**il comprend les étapes de fonctionnement suivantes relatives au processus d'acquisition :

a) l'unité périphérique série de numérisation (21) est prédisposée à l'envoi des données à acquérir en entrée vers une file d'attente FIFO (25) du support externe (22) par :

a-1) la configuration d'un seul fichier constitué d'une succession séquentielle linéaire de données, dans des secteurs de dimension constante, lequel peut être partagé, entre l'unité périphérique série (21) et le processeur (24), les deux pouvant se faire en parallèle, la lecture et l'écriture, sur ledit fichier,
a-2) l'insertion dans le premier secteur dudit fichier, pour l'organisation de la file d'attente FIFO dans le fichier, des codes de fonctionnement suivants :

i. commande (1) de l'ordinateur (24) à l'unité périphérique série (21),
ii. réponse à la commande (4) de l'unité périphérique série (21) à l'ordinateur (24),
iii. pointeur vers le secteur (2) en train d'être lu par l'ordinateur (24),
iv. pointeur vers le point (3) en train d'être lu par l'ordinateur (24),
v. pointeur vers le secteur (5) en train d'être écrit par l'unité périphérique série (21),
vi. pointeur vers le point (6) en train d'être écrit par l'unité périphérique série (21),

b) le processeur (24) lit les données de la FIFO (25) au fur et à mesure que ces dernières sont acquises depuis la sortie de l'unité périphérique (21), et les visualise sur le dispositif d'affichage avec le seul retard donné par la communication du support mémoire informatique, sans retards imputables à un processus d'acquisition basé sur la durée totale de l'entrée dans le périphérique (21), l'accès aux secteurs du fichier (B, C, ...N) du second au dernier configurés pour contenir les données des points détectés par l'unité périphérique (21) se faisant instantanément.

8. Système en temps réel pour la mémorisation et la transmission bidirectionnelles de commandes et de données selon l'une quelconque des revendications de procédé précédentes, **caractérisé en ce qu'**afin d'activer les opérations de détection de données numériques :

I. le processeur (24) écrit la commande correspondante sous la forme d'un octet dans la position du premier secteur (1) ;
II. l'unité périphérique série (21), étant donné qu'elle est inopérante, lit en continu ledit premier secteur (1) dès qu'elle voit la commande insérée dans ladite première position commencer à acquérir les données en entrée et communique l'acceptation de la commande en écrivant la réponse, sous la forme d'un octet, dans la position (4) ;
III. en parallèle, elle écrit dans les positions (2) et (5) le numéro du premier secteur de données du support mémoire externe et active les positions (3) et (6) ;
IV. le processeur (24) voit la réponse à la commande en position (4) et se prédispose à visualiser la piste qui sera fixée (par l'utilisateur) et acquise ;
V. l'unité périphérique série (21) acquiert les points de la piste et les insère progressivement chacun dans le secteur adressé par le pointeur de secteur (5) et par le pointeur de point (6) ;
VI. pour chaque point fourni en entrée, l'unité périphérique augmente le pointeur de point (6) et, lorsqu'il dépasse le nombre de points pouvant être contenus dans un secteur, elle met à zéro le pointeur de point (6) et augmente le pointeur de secteur (5) d'une unité ;
VII. si le pointeur de secteur dépasse le dernier secteur du support de mémorisation externe, l'unité périphérique série (21) le remet à la valeur initiale, réutilisant ainsi le premier secteur libre qui, entre-temps, aura déjà été lu par l'ordinateur,

et **en ce que** pendant que l'unité périphérique série (21) acquiert les points en entrée selon la séquence I-VII, effectivement parallèlement au processeur (24), les étapes de fonctionnement suivantes sont exécutées :

a) le processeur (24) voit que le pointeur (6) ou le pointeur (5) sont différents des pointeurs (3) et (2), et détecte ainsi qu'il y a des points prêts à être lus ;
b) le processeur (24) lit chaque point depuis le support mémoire externe, dans la mémoire fonctionnelle de celui-ci et augmente le pointeur (3) ;
c) si le pointeur (3) dépasse le nombre de points par secteur, le processeur (24) met le pointeur (3) à zéro et augmente le pointeur (2) ;
d) le processeur s'arrête dès que tous les points générés par l'unité périphérique série ont été lus, cette condition se réalisant lorsque le pointeur augmenté (3) atteint la même valeur que le pointeur (6) et que le pointeur (2) atteint la même valeur que le pointeur (5) ;

la bonne exécution de l'opération de transfert de données n'étant pas liée à la chronologie exacte des événements, du fait que l'unité périphérique série (21) écrit sur les pointeurs (5) et (6) uniquement pendant que le processeur (24) écrit sur les pointeurs (2) et (3).

**9.** Système en temps réel pour la mémorisation et la transmission bidirectionnelles de commandes et de données selon les revendications de procédé précédentes, **caractérisé en ce que** si l'acquisition par le processeur (24) ralentit ou s'arrête pendant un laps de temps donné, l'unité périphérique série (21) continue d'écrire les données dans le fichier et de mettre à jour les pointeurs, en récupérant le retard et en acquérant les points en attente dans la FIFO, lorsque le processeur est à nouveau disponible.

**10.** Système en temps réel pour la mémorisation et la transmission bidirectionnelles de commandes et de données selon les revendications de procédé précédentes, **caractérisé en ce que**, conformément aux conditions fonctionnelles limites :

    i. file d'attente FIFO vide : lorsque pointeur (2) = pointeur (5) et pointeur (3) = pointeur (6) ;
    ii. file d'attente FIFO pleine : lorsque pointeur (5) = pointeur (2) moins de 1,

une fois la fin du fichier atteinte, l'unité périphérique série (21) reprend l'écriture à partir du deuxième secteur, réutilisant ainsi la zone utilisée précédemment, pour autant que celle-ci ait été libérée entre-temps par le processeur.

**11.** Système en temps réel pour la mémorisation et la transmission bidirectionnelles de commandes et de données selon les revendications de procédé précédentes, **caractérisé en ce qu'**il permet le chiffrement des données avant leur transmission, qui s'obtient avec un algorithme symétrique, point par point de la piste en entrée, au même point lorsque chaque point de la piste, à peine acquis, est écrit dans la mémoire vive qui forme les secteurs du disque d'échange de données, la clé de chiffrement étant renouvelée à chaque opération de signature au travers du protocole de cryptographie dédié, en effectuant les étapes de fonctionnement suivantes :

    a) selon la configuration dédiée des codes de fonctionnement, le processeur (24) écrit

        - dans la position (1) du premier secteur du disque (l'octet) la commande d'échange de clé, et sa clé aléatoire (Ka) dans les octets suivants,

    b) l'unité périphérique série (21) répond en insérant, dans l'octet à la position (4), la réponse affirmative à la commande reçue, et en insérant ensuite sa clé aléatoire (Kb) ;
    c) ensuite, les deux périphériques effectuent immédiatement les opérations prévues par l'algorithme de cryptographie, générant la clé de cryptographie commune et symétrique qui est utilisée lors de l'opération de signature consécutive.

**12.** Système en temps réel pour la mémorisation et la transmission bidirectionnelles de commandes et de données selon l'une quelconque des revendications de procédé précédentes, **caractérisé en ce que** la fonctionnalité de visualisation des images sur le périphérique E/S (21) permet une configuration dédiée des codes de fonctionnement avec les étapes de fonctionnement suivantes :

    a) la division des données d'image en blocs d'une dimension équivalente à un secteur du disque, le processeur insérant (dans la première position) l'octet de commande de visualisation d'image et (dans les positions suivantes) les coordonnées sur l'écran $(X_1, Y_1)$ et $(X_2, Y_2)$ des deux coins supérieur droit et inférieur gauche de l'image à afficher, le compteur (Bw) des blocs écrits et le compteur (Br) des blocs lus étant ainsi mis à zéro ;
    b) l'écriture (par l'unité périphérique série (21)) de la réponse à la commande dans la position correspondante (2), le processeur commençant à écrire (dans les secteurs de données) les blocs dans lesquels il a divisé l'image, en augmentant pour chaque bloc écrit le compteur des blocs écrits (Bw), dans lequel l'unité périphérique série voit que le compteur des blocs lus (Br) est différent du compteur des blocs écrits (Bw) et commence à lire les blocs de données et à les transférer au dispositif d'affichage, augmentant le compteur des blocs lus (Br) à chaque décompte, et continue jusqu'à ce que le compteur des blocs lus (Br) soit égal au compteur des blocs écrits (Bw) ;
    c) l'unité périphérique série, lorsqu'elle reçoit toutes les données requises pour compléter l'image, en écrivant les pixels de position $(X_2, Y_2)$, comprend que la fin de la transmission de l'image a été atteinte et retire sa réponse de la position (2) du premier secteur, le processeur détectant alors que la transmission s'est bien terminée.

**13.** Système en temps réel pour la mémorisation et la transmission bidirectionnelles de commandes et de données selon l'une quelconque des revendications de procédé précédentes, **caractérisé en ce que** l'allocation desdits blocs consécutifs correspondant aux secteurs du disque fonctionne sur le principe d'une file d'attente FIFO circulaire, le numéro actuel du secteur en cours d'obtention commençant à partir du numéro actuel du bloc sous la forme

```
Secteur = 2 + Bloc mod Ns
```

Ns étant le nombre de secteurs du disque disponibles pour les données ; et l'opération modulo obtenant automatiquement le renvoi au premier secteur lorsque le pointeur vers le bloc dépasse la fin du support mémoire externe, compte tenu des conditions limites suivantes :

  i. tampon vide, compteur des blocs lus (Br) = compteur des blocs écrits (Bw)
  ii. tampon plein, compteur des blocs écrits (Bw) - compteur des blocs lus (Br) = Ns

d'où, respectivement :

  a) lorsque le tampon est vide, l'unité périphérique série cesse de lire ;
  b) lorsque le tampon est plein, le processeur cesse d'écrire jusqu'à ce que l'unité périphérique série ait libéré l'espace.

Fig. 1

Fig. 2

SECTOR

A

| 1 | 2 | 3 | | 4 | 5 | 6 | | SECTOR B = DATA | SECTOR N = DATA |

Fig. 3

FLASH
MEMORY

| MBR |
| BOOT SECTOR |
| FAT |
| ROOT DIRECTORY |
| DATA |

USB ⟷ USB INTERFACE ⟷ MSD / FAT ⟷ MEMORY MANAGER ⟷

31   32   33   34   35

Fig. 4

| MBR |
| BOOT SECTOR |
| FAT |
| ROOT DIRECTORY |

| DATA |

USB ⟷ USB INTERFACE ⟷ MSD / FAT ⟷ MEMORY MANAGER ⟷

31   32   33   34   38   39

Fig. 5

SECTOR

A

| 1 | $K_a$ | 4 | $K_b$ | SECTOR B = DATA | SECTOR N = DATA |

21

24

Fig. 6

EP 3 090 348 B1

Fig. 7

23

**EP 3 090 348 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6307955 B
- IT RM20110370 A
- IT RM20110652 A